# DEMANDE DE BREVET EUROPEEN

(11) **EP 0 768 805 A1**
(43) Date de publication de la demande: **16.04.1997**
(21) Numéro de dépôt: 96402123.2
(22) Date de dépôt: 07.10.1996
(51) Int. Cl.: H04Q 7/38

(54) **Dispositif de commande de changement de niveau de cellule pour réseau cellulaire de radiocommunication mobiles à plusieurs niveaux de cellules**

(30) Priorité: 12.10.1995 FR 9511985
(71) Demandeur: ALCATEL CIT, 75008 Paris (FR)
(72) Inventeur: Cherpantier, Corinne, 92380 Garches (FR); Julia, Laurent, 75016 Paris (FR)
(74) Mandataire: El Manouni, Josiane

(57) **Abrégé**

Dispositif de commande de changement de niveau de cellule pour réseau cellulaire de radiocommunications mobiles à plusieurs niveaux de cellules, dispositif comportant des moyens (1, 2) permettant, lorsqu'un mobile est servi par une cellule de niveau inférieur, contenue dans une cellule de niveau supérieur, ou lorsqu'un mobile est sevi par une cellule de niveau supérieur et lorsqu'il est déterminé qu'une cellule de niveau inférieur contenue dans cette cellule de niveau supérieur constitue une meilleure cellule, de comparer la valeur d'un paramètre représentatif de la vitesse de ce mobile à un seuil en vue de décider s'il y a lieu de commander un changement de niveau de cellule, ce dispositif étant essentiellement caractérisé en ce qu'il comporte en outre des moyens (3) pour déterminer la charge de ladite cellule de niveau supérieur, et des moyens (4) pour faire varier ledit seuil en fonction de ladite charge.

## Description

La présente invention concerne les réseaux cellulaires de radiocommunications mobiles.

La présente invention concerne plus particulièrement les réseaux cellulaires de radiocommunications mobiles comportant plusieurs niveaux de cellules, telles que par exemple des macro-cellules (appelées aussi cellules parapluie) et des micro-cellules, contenues dans ces dernières et permettant localement de les décharger dans des zones à fort trafic et/ou d'éviter des zones d'ombre dans leur couverture géographique.

D'une manière générale, dans les réseaux cellulaires, il est connu de sélectionner en permanence, en cours de communication, la meilleure cellule, cette meilleure cellule étant notamment celle permettant d'obtenir une meilleure qualité de communication, en vue d'effectuer un changement de cellule, ou "handover", de la cellule serveuse actuelle vers cette meilleure cellule qui devient ainsi la nouvelle cellule serveuse.

Divers paramètres tels que notamment le niveau de réception, pour la cellule serveuse et les cellules voisines, peuvent ainsi être pris en compte pour déterminer cette meilleure cellule.

Dans le cas de réseaux cellulaires à plusieurs niveaux de cellules, il est en outre connu, lorsqu'un mobile est servi par une macro-cellule, et lorsqu'il est déterminé qu'une microcellule contenue dans cette macro-cellule constitue une meilleure cellule, suivant le critère de meilleure qualité de communication rappelé plus haut, de vérifier si au bout d'un certain temps appelé durée de résidence minimum, cette micro-cellule constitue toujours une meilleure cellule, avant d'autoriser un changement de niveau de cellule serveuse, en l'occurrence de la macro-cellule vers cette micro-cellule, cette condition étant satisfaite notamment lorsque la vitesse de ce mobile est suffisamment faible.

Une telle façon de faire est par exemple décrite dans le document EP 0589278.

Elle permet d'éviter, dans le cas d'un mobile rapide traversant une succession de micro-cellules à l'intérieur de la macro-cellule, d'avoir à effectuer sans arrêt des changements de cellule serveuse, ce qui pourrait nuire à la qualité de la communication, voire provoquer une perte d'appel.

Il est également connu, lorsqu'un mobile est servi par une micro-cellule, et lorsqu'il est déterminé que la vitesse de ce mobile est suffisamment élevée, d'effectuer pour les mêmes raisons un changement de niveau de cellule, en l'occurrence de cette micro-cellule vers la macro-cellule la contenant.

Un problème se pose cependant avec de telles méthodes car une durée de résidence minimum trop élevée, ou une vitesse minimum trop faible, peuvent conduire à une saturation de la macrocellule, de même qu'une durée de résidence minimum trop peu élevée, ou une vitesse minimum trop élevée, peuvent conduire à augmenter inconsidérément le nombre de changements de cellule.

La présente invention a essentiellement pour but de résoudre ce problème.

La présente invention a ainsi pour objet un dispositif de commande de changement de niveau de cellule pour réseau cellulaire de radiocommunications mobiles à plusieurs niveaux de cellules, ce dispositif comportant des moyens permettant, lorsqu'un mobile est servi par une cellule de niveau inférieur, contenue dans une cellule de niveau supérieur, ou lorsqu'un mobile est servi par une cellule de niveau supérieur et lorsqu'il est déterminé qu'une cellule de niveau inférieur contenue dans cette cellule de niveau supérieur constitue une meilleure cellule, de comparer la valeur d'un paramètre représentatif de la vitesse de ce mobile à un seuil en vue de décider s'il y a lieu de commander un changement de niveau de cellule, et ce dispositif étant essentiellement caractérisé en ce qu'il comporte en outre des moyens pour déterminer la charge de ladite cellule de niveau supérieur, et des moyens pour faire varier ledit seuil en fonction de ladite charge.

De façon symétrique, la présente invention a également pour objet un dispositif de commande de changement de niveau de cellule pour réseau cellulaire de radiocommunications mobiles à plusieurs niveaux de cellules, ce dispositif comportant des moyens permettant, lorsqu'un mobile est servi par une cellule de niveau supérieur, contenant une cellule de niveau inférieur, ou lorsqu'un mobile est servi par une cellule de niveau inférieur et lorsqu'il est déterminé qu'une cellule de niveau supérieur contenant cette cellule de niveau inférieur constitue une meilleure cellule, de comparer la valeur d'un paramètre représentatif de la vitesse de ce mobile à un seuil en vue de décider s'il y a lieu de commander un changement de niveau de cellule, et ce dispositif étant essentiellement caractérisé en ce qu'il comporte en outre des moyens pour déterminer la charge de ladite cellule de niveau inférieur, et des moyens pour faire varier ledit seuil en fonction de ladite charge.

D'autres objets et caractéristiques de la présente invention apparaîtront à la lecture de la description suivante d'un exemple de réalisation, faite en relation avec les dessins ci-annexés dans lesquels :
- la figure 1 est un schéma général d'un exemple de réalisation d'un dispositif suivant l'invention,
- la figure 2 est un diagramme destiné à illustrer le principe mis en oeuvre par un dispositif suivant la figure 1.

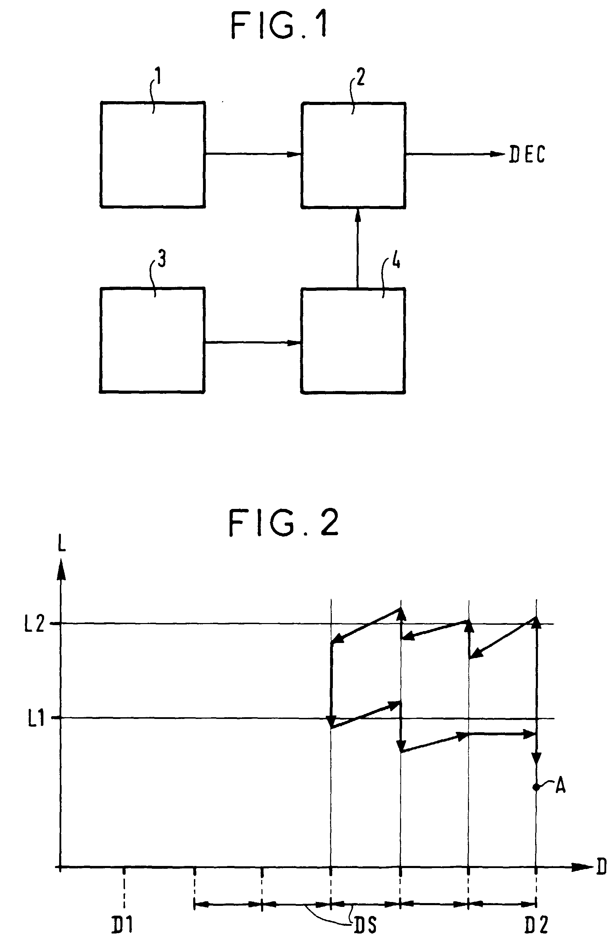

La réalisation décrite ci-après en relation avec les figures 1 et 2 correspond plus particulièrement, à titre d'exemple, au cas où on fait varier ledit seuil en fonction de la charge de la cellule de niveau supérieur (par exemple macro-cellule) et au cas où la cellule serveuse actuelle est constituée par cette cellule de niveau supérieur.

Le dispositif illustré sur la figure 1 comporte ainsi :
- des moyens, 1, pour déterminer en permanence la meilleure cellule, par exemple suivant un critère de meilleure qualité de communication,
- des moyens, 2, pour déterminer, dans le cas où cette meilleure cellule est une cellule de niveau inférieur (par exemple micro-cellule), si au bout d'un certain temps appelé durée de résidence minimum de ce mobile dans cette cellule de niveau inférieur, cette cellule de niveau inférieur constitue toujours une meilleure cellule, auquel cas une commande de changement de niveau, en l'occurrence de la cellule de niveau supérieur vers la cellule de niveau inférieur, est effectuée,
- des moyens, 3, pour déterminer en permanence la charge de la cellule de niveau supérieur incluant la cellule de niveau inférieur considérée,
- des moyens, 4, pour faire varier la durée de résidence minimum utilisée par les moyens 2, en fonction de la charge ainsi déterminée par les moyens 3.

Dans cet exemple l'ensemble formé par les moyens 1 et 2 constitue lesdits moyens permettant, lorsqu'un mobile est servi par une cellule de niveau supérieur et lorsqu'il est déterminé qu'une cellule de niveau inférieur constitue une meilleure cellule, de comparer la valeur d'un paramètre représentatif de la vitesse de ce mobile (en l'occurrence la durée de résidence) à un seuil, en vue de décider d'une commande de changement de niveau de cellule).

La décision, notée DEC, de changement ou non de niveau de cellule est issue des moyens 2 opérant ainsi sous la commande des moyens 4.

Les moyens 1 pour déterminer une meilleure cellule sont des moyens classiquement prévus dans les systèmes cellulaires où un mobile effectue régulièrement des mesures, notamment des mesures de niveau reçu de sa cellule serveuse et de cellules voisines, et transmet les résultats de ces mesures à sa cellule serveuse (par exemple, dans le système GSM, en utilisant un canal à bas débit dit SACCH :"Slow Associated Control Channel").

Les moyens 2 pour déterminer, dans le cas où le mobile est servi par une cellule de niveau supérieur et où la meilleure cellule ainsi déterminée est une cellule de niveau inférieur, si, au bout d'un certain temps appelé durée de résidence minimum de ce mobile dans cette cellule de niveau inférieur, cette cellule de niveau inférieur constitue toujours une meilleure cellule, comportent par exemple des moyens pour mémoriser plusieurs résultats successifs fournis par les moyens 1 pendant ce temps appelé durée de résidence minimum, et pour déterminer, à partir de l'ensemble de ces résultats, si cette cellule de niveau inférieur constitue bien une meilleure cellule.

Les moyens 3 pour déterminer la charge de la cellule de niveau supérieur peuvent par exemple opérer, dans un système à accès multiple (permettant simultanément différentes communications sur différents canaux dits de trafic) en effectuant le rapport du nombre de canaux de trafic occupés au nombre total de canaux de trafic.

Les moyens 4 pour faire varier la durée de résidence minimum en fonction de la charge de la cellule de niveau supérieur peuvent par exemple opérer suivant l'exemple maintenant décrit.

Par exemple, lorsque la charge de la cellule de niveau supérieur est supérieure à une valeur dite haute, la durée de résidence minimum est réduite d'une valeur prédéterminée, par exemple x secondes, et lorsque cette charge est inférieure à une valeur dite basse, la durée de résidence minimum est augmentée d'une valeur prédéterminée, par exemple x secondes.

Ceci est illustré sur le diagramme de la figure 2 où sont portées :
- en abscisse la durée de résidence minimum, notée D, dans une cellule de niveau inférieur,
- en ordonnée la charge, notée L, de la cellule de niveau supérieur incluant cette cellule de niveau inférieur. En abscisse sont en outre notées :
- une valeur dite inférieure de durée de résidence minimum, notée D1, consistant en pratique dans la durée minimum de renouvellement des mesures effectuées sur les paramètres pris en compte pour déterminer si la cellule de niveau inférieur constitue une meilleure cellule, nécessaire pour obtenir une stabilité de ces mesures,
- une valeur dite supérieure de durée de résidence minimum, notée D2, à partir de laquelle il est décidé, sans autre condition, que la cellule serveuse doit être constituée par la cellule de niveau inférieur.

En ordonnée sont en outre notées :
- une valeur basse de charge de la cellule de niveau supérieur, notée L1.
- une valeur haute de charge de la cellule de niveau supérieur, notée L2.

A partir d'un point initial, noté A, correspondant par exemple à la valeur D2 et à une valeur de charge inférieure à la valeur basse L1 (ce qui est par exemple le cas en début de journée, alors que le trafic est faible), il se produit une augmentation de la charge L.

A partir du moment où cette charge L dépasse la valeur haute L2, la durée de résidence minimum est réduite, par pas, ce pas étant noté DS, de façon à maintenir la charge L dans la zone comprise entre L1 et L2.

Inversement, à partir du moment où la charge L devient inférieure à la valeur basse L1 (notamment parce que, en fin de journée, le trafic diminue) la durée de résidence minimum est accrue, par pas, de façon à ne pas accroître inconsidérément le nombre de changements de cellule serveuse, et ce jusqu'à retourner à la situation initiale (point A).

Un autre exemple d'application de l'invention consiste dans le cas où la cellule serveuse est une cellule de niveau inférieur et où on détermine si la vitesse du mobile est suffisante pour décider d'un changement de niveau de cellule, en l'occurrence de cette cellule de niveau inférieur vers la cellule de niveau supérieur la contenant.

Suivant l'invention, on fait varier la vitesse minimum du mobile à partir de laquelle est décidé un tel changement de niveau de cellule, en fonction de la charge de la cellule de niveau supérieur, suivant un principe tout à fait similaire à celui décrit dans l'exemple précédent, à ceci près que dans ce cas on augmente le seuil lorsque la charge augmente et on réduit ce seuil lorsque cette charge diminue.

Ainsi, si la charge de la cellule de niveau supérieur est élevée, un mobile rapide est gardé sur le niveau inférieur.

De façon symétrique, la présente invention a également pour objet un dispositif de commande de changement de niveau de cellule pour réseau cellulaire de radiocommunications mobiles à plusieurs niveaux de cellules, ce dispositif comportant:
- des moyens (qui peuvent également être illustrés par les moyens 1, 2 de la figure 1) permettant, lorsqu'un mobile est servi par une cellule de niveau supérieur, contenant une cellule de niveau inférieur, ou lorsqu'un mobile est servi par une cellule de niveau inférieur et lorsqu'il est déterminé qu'une cellule de niveau supérieur contenant cette cellule de niveau inférieur constitue une meilleure cellule, de comparer la valeur d'un paramètre représentatif de la vitesse de ce mobile à un seuil en vue de décider s'il y a lieu de commander un changement de niveau de cellule,
- des moyens (qui peuvent également être illustrés par les moyens 3 de la figure 1) pour déterminer la charge de ladite cellule de niveau inférieur, et
- des moyens (qui peuvent également être illustrés par les moyens 4 de la figure 1) pour faire varier ledit seuil en fonction de ladite charge.

De façon symétrique :
- dans le cas de changement de niveau de cellule du niveau supérieur vers le niveau inférieur lesdits moyens pour faire varier ledit seuil en fonction de ladite charge comportent des moyens pour accroître ce seuil lorsque cette charge augmente,
- dans le cas de changement de niveau de cellule du niveau supérieur vers le niveau inférieur lesdits moyens pour faire varier ledit seuil en fonction de ladite charge comportent des moyens pour réduire ce seuil lorsque cette charge diminue,
- dans le cas de changement de cellule du niveau inférieur vers le niveau supérieur, lesdits moyens pour faire varier ledit seuil en fonction de ladite charge comportent des moyens pour accroître ce seuil lorsque cette charge diminue,
- dans le cas de changement de cellule du niveau inférieur vers le niveau supérieur, lesdits moyens pour faire varier ledit seuil en fonction de ladite charge comportent des moyens pour réduire ce seuil lorsque cette charge augmente.

## Revendications

1. Dispositif de commande de changement de niveau de cellule pour réseau cellulaire de radiocommunications mobiles à plusieurs niveaux de cellules, dispositif comportant des moyens (1, 2) permettant, lorsqu'un mobile est servi par une cellule de niveau inférieur, contenue dans une cellule de niveau supérieur, ou lorsqu'un mobile est servi par une cellule de niveau supérieur et lorsqu'il est déterminé qu'une cellule de niveau inférieur contenue dans cette cellule de niveau supérieur constitue une meilleure cellule, de comparer la valeur d'un paramètre représentatif de la vitesse de ce mobile à un seuil en vue de décider s'il y a lieu de commander un changement de niveau de cellule, dispositif caractérisé en ce qu'il comporte en outre des moyens (3) pour déterminer la charge de ladite cellule de niveau supérieur, et des moyens (4) pour faire varier ledit seuil en fonction de ladite charge.

2. Dispositif selon la revendication 1, caractérisé en ce que dans le cas de changement de niveau de cellule du niveau supérieur vers le niveau inférieur lesdits moyens (4) pour faire varier ledit seuil en fonction de ladite charge comportent des moyens pour réduire ce seuil lorsque cette charge augmente.

3. Dispositif selon la revendication 1, caractérisé en ce que dans le cas de changement de niveau de cellule du niveau supérieur vers le niveau inférieur lesdits moyens (4) pour faire varier ledit seuil en fonction de ladite charge comportent des moyens pour accroître ce seuil lorsque cette charge diminue.

4. Dispositif selon la revendication 1, caractérisé en ce que dans le cas de changement de cellule du niveau inférieur vers le niveau supérieur, lesdits moyens (4) pour faire varier ledit seuil en fonction de ladite charge comportent des moyens pour réduire ce seuil lorsque cette charge diminue.

5. Dispositif selon la revendication 1, caractérisé en ce que dans le cas de changement de cellule du niveau inférieur vers le niveau supérieur, lesdits moyens (4) pour faire varier ledit seuil en fonction de ladite charge comportent des moyens pour accroître ce seuil lorsque cette charge augmente.

6. Dispositif de commande de changement de niveau de cellule pour réseau cellulaire de radiocommunications mobiles à plusieurs niveaux de cellules, dispositif comportant des moyens (1, 2) permettant, lorsqu'un mobile est servi par une cellule de niveau supérieur, contenant une cellule de niveau inférieur, ou lorsqu'un mobile est servi par une cellule de niveau inférieur et lorsqu'il est déterminé qu'une cellule de niveau supérieur contenant cette cellule de niveau inférieur constitue une meilleure cellule, de comparer la valeur d'un paramètre représentatif de la vitesse de ce mobile à un seuil en vue de décider s'il y a lieu de commander un changement de niveau de cellule, dispositif caractérisé en ce qu'il comporte en outre des moyens (3) pour déterminer la charge de ladite cellule de niveau inférieur, et des moyens (4) pour faire varier ledit seuil en fonction de ladite charge.

7. Dispositif selon la revendication 6, caractérisé en ce que dans le cas de changement de niveau de cellule du niveau supérieur vers le niveau inférieur lesdits moyens (4) pour faire varier ledit seuil en fonction de ladite charge comportent des moyens pour accroître ce seuil lorsque cette charge augmente.

8. Dispositif selon la revendication 6, caractérisé en ce que dans le cas de changement de niveau de cellule du niveau supérieur vers le niveau inférieur lesdits moyens (4) pour faire varier ledit seuil en fonction de ladite charge comportent des moyens pour réduire ce seuil lorsque cette charge diminue.

9. Dispositif selon la revendication 6, caractérisé en ce que dans le cas de changement de cellule du niveau inférieur vers le niveau supérieur, lesdits moyens (4) pour faire varier ledit seuil en fonction de ladite charge comportent des moyens pour accroître ce seuil lorsque cette charge diminue.

10. Dispositif selon la revendication 6, caractérisé en ce que dans le cas de changement de cellule du niveau inférieur vers le niveau supérieur, lesdits moyens (4) pour faire varier ledit seuil en fonction de ladite charge comportent des moyens pour réduire ce seuil lorsque cette charge augmente.
